Europäisches Patentamt

European Patent Office

Office européen des brevets

(11) Veröffentlichungsnummer: **0 314 954**

**A2**

## (12) EUROPÄISCHE PATENTANMELDUNG

(21) Anmeldenummer: **88116994.0**

(22) Anmeldetag: **13.10.88**

(51) Int. Cl.⁴: **B28D 1/18** , //B23Q11/00, **B27B9/02**

(30) Priorität: **31.10.87 DE 3737045**

(43) Veröffentlichungstag der Anmeldung: **10.05.89 Patentblatt 89/19**

(84) Benannte Vertragsstaaten: **CH DE ES FR GB IT LI**

(71) Anmelder: **CRONES & CO. GMBH Gutenbergstrasse 4 Postfach 11 05 D-8800 Ansbach(DE)**

(72) Erfinder: **Biersack, Horst Weinbergstrasse 16 D-8802 Sachsen(DE)**

(74) Vertreter: **Sturies, Herbert et al Patentanwälte Dr. Ing. Dipl. Phys. Herbert Sturies Dipl. Ing. Peter Eichler Postfach 20 12 42 D-5600 Wuppertal 2(DE)**

(54) **Motorisch betreibbares Handgerät zum Fräsen von Nuten in Wänden od. dgl.**

㉗ Handgeräte zum Fräsen von Nuten in Wänden od. dgl. sind mit einem Fahrrollen (1) aufweisenden und damit höhenverstellbar verbundenen Gerätegehäuse (3) versehen, in welchem einerseits der Antriebsmotor nebst Getriebe und andererseits die Fräserwelle mit an ihrem stirnseitig aus dem Gerätegehäuse herausragenden Ende sitzendem Fräser untergebracht sind, und wobei weiterhin noch ein letzteren stirnseitig abdeckender Gehäusedeckel (10) und eine Staubsammeleinrichtung vorgesehen sind.

Um zu einem kompakten und einfach zu bedienenden bzw. zu führenden Nutenfräsgerät zu kommen, sind die Fahrrollen (1) auf einem gemeinsamen Fahrgestell (2) angebracht, ist weiterhin das Gerätegehäuse (3, 4) mit dem Fahrgestell (2) in Höhe seiner vorderen Fahrrollenachse (1') schwenkverstellbar verbunden und hier mit einem formsteifen Staubsammelbehälter (9) versehen, der sich im wesentlichen achsparallel zu dem überwiegend in Höhe der hinteren Fahrrollenachse (1") liegenden Gerätegehäusebereich erstreckt, in welchem der Motor, das Getriebe, die Fräserwelle und der Fräser untergebracht sind. Der Gehäusedeckel (10) ist auch auf der vorderen Fahrrollenachse (1') schwenkverstellbar.

Fig.1

## Motorisch betreibbares Handgerät zum Fräsen von Nuten in Wänden od. dgl.

Die Erfindung betrifft ein motorisch betreibbares Handgerät zum Fräsen von Nuten in Wänden od.dgl., mit einem auf die Wand aufsetzbare Fahrrollen aufweisenden und damit höhenverstellbar verbundenen Gerätegehäuse, in welchem einerseits der Antriebsmotor nebst Getriebe und andererseits die Fräserwelle mit an ihrem stirnseitig aus dem Gerätegehäuse herausragenden Ende sitzendem Fräser untergebracht sind, einem letzteren stirnseitig abdeckenden Gehäusedeckel und einer Staubsammeleinrichtung.

Nutenfräsgeräte obiger Art sind z. B. durch die DE-PS 498 645 bekannt. Die Fahrrollen sitzen dabei auf getrennten Verstellschienen, die über Schlitzführungen und jeweils mehrere Klemmschrauben gegenüber dem Gerätegehäuse in senkrecht zur Wand- bzw. Fahrrollenebene verlaufender Richtung verstellt werden können. Die dadurch erzielbare Tiefenverstellung des Fräsers ist damit nur recht umständlich vorzunehmen, noch dazu in Ermangelung einer entsprechenden Fräsertiefenanzeige. Die Staubabfuhr erfolgt durch einen hohl ausgebildeten, das Motor- und Getriebegehäuse etwa gabelartig umschließenden Gehäuserahmen, wobei auf der dem Fräser gegenüberliegenden Gehäuse-Stirnseite ein umlaufendes Gebläserad angebracht ist, das den anfallenden Frässtaub über einen entsprechenden Gebläseschlauch zu einem ortsfest angeordneten Staubsammelbehälter fortschaffen muß. Auch das ist nicht nur gerätemäßig aufwendig sondern erschwert auch die Bedienung des Geräts und seine freie Verfahrbarkeit. Daher ist man bei solchen Nutenfräsgeräten dazu übergegangen, Staubsammelbeutel unmittelbar am Gerätegehäuse anzubringen, wobei man wie etwa im Falle der DE-PS 20 15 937 auch bereits besondere Stützeinrichtungen für den Staubauffangbeutel vorgesehen hat, um sicherzustellen, daß der Beutel auch in schlaff herabhängendem Zustand und unabhängig von der jeweiligen Arbeitslage des Geräts noch mit Staub gefüllt werden kann. Aber auch diese Staubsammeleinrichtung ist noch recht umständlich zu handhaben und erschwert den Umgang mit dem Fräsgerät, zumal der überwiegend aus Plastikmaterial bestehende Staubfangbehälter dabei leicht einreißen und sich im gefüllten Zustand auch leicht von der Staubaustrittsöffnung des Geräts ablösen kann. Weiterhin ist bei den bekannten Nutfräsgeräten ein Fräserwechsel nur umständlich vorzunehmen, weil dazu in aller Regel eine Teilmontage des Geräts notwendig ist.

Der Erfindung liegt die Aufgabe zugrunde, ein Handgerät zum Fräsen von Nuten in Wände od. dgl. zu schaffen, das frei von den vorerwähnten Nachteilen ist, vielmehr von gedrungener Bauart und einfacherer Bedienbarkeit ist, bessere Staubauffang und -beseitigungsmöglichkeiten bietet sowie auch den allfällig vorzunehmenden Fräserwechsel einfacher durchzuführen erlaubt.

Diese Aufgabe wird erfindungsgemäß im wesentlichen dadurch gelöst, daß die Fahrrollen auf einem gemeinsamen Fahrgestell angebracht sind, das Gerätegehäuse mit dem Fahrgestell in Höhe seiner einen Fahrrollenachse schwenkverstellbar verbunden und hier mit einem formsteifen Staubsammelbehälter versehen ist, der sich im wesentlichen achsparallel zu dem überwiegend in Höhe der anderen Fahrrollenachse liegenden Gerätegehäusebereich erstreckt, in welchem der Motor, das Getriebe, die Fräserwelle und der Fräser untergebracht sind. Vorteilhaft verläuft die Schwenkverstellachse zwischen Gerätegehäuse und Fahrgestell durch die in Fahrrichtung vordere Fahrrollenachse, wobei der halbschalenartig ausgebildete Gehäusedeckel sowohl gemeinsam mit dem Gerätegehäuse als auch unabhängig davon gleichfalls um diese Schwenkverstellachse schwenkverstellbar ist. Auf diese Weise kommt man zu einem kompakten, leicht zu bedienenden Nutenfräsgerät, das eine bequem vorzunehmende Tiefenverstellung des Fräsers wie aber auch dessen leichte Auswechselbarkeit ermöglicht und bei dem der Staubsammelbehälter formsteif in das Gerätegehäuse integriert ist, mithin unabhängig von seinem jeweiligen Füllzustand ohne störenden Einfluß auf die Bedienung, insbesondere Führung des Handgeräts ist.

Zwischen dem Gehäusedeckel und dem Gerätegehäuse ist vorteilhaft eine sie miteinander fest zu verbinden erlaubende, im Gehäusedeckel gelagerte Knebelschraube vorhanden, die mit ihrem Gewindeschaftende in ein am Gerätegehäuse angebrachte Schraubenmutter greift, wobei die Knebelschraube vorteilhaft zugleich zur Schwenkverstellarretierung des Deckels und Gehäuses gegenüber dem Fahrgestell dient. Zugleich kann aber bei vollständig aus dem Gerätegehäuse ausgeschraubter Knebelschraube der Gehäusedeckel unabhängig vom Gehäuse weit ausgeschwenkt werden, um dadurch den Fräser etwa für seinen allfälligen Wechsel vollständig freizulegen.

Zwischen der Knebelschraube und dem Fahrgestell ist zweckmäßig noch eine auf der Außenseite des Gehäusedeckels angeordnete, höhenverstellbare Stellstange vorhanden, die durch die Knebelschraube festzuklemmen ist. Diese Stell stange kann mit ihrem unteren Ende am Fahrgestell gelenkig und aushängbar befestigt sein, während sie an ihrem oberen Ende einen vom Schaft der Knebelschraube durchdrungenen Längsschlitz aufweist.

Hierdurch kann mit Hilfe der Knebelschraube und der Stellstange eine äußerst einfache Tiefenverstellung des Fräsers vorgenommen werden.

In der Zeichnung ist ein vorteilhaftes Ausführungsbeispiel eines erfindungsgemäß ausgebildeten Handgeräts zum Nutenfräsen dargestellt. Dabei zeigen

Fig. 1 eine perspektivische Ansicht des Geräts,

Fig. 2 die Draufsicht auf das Gerät,

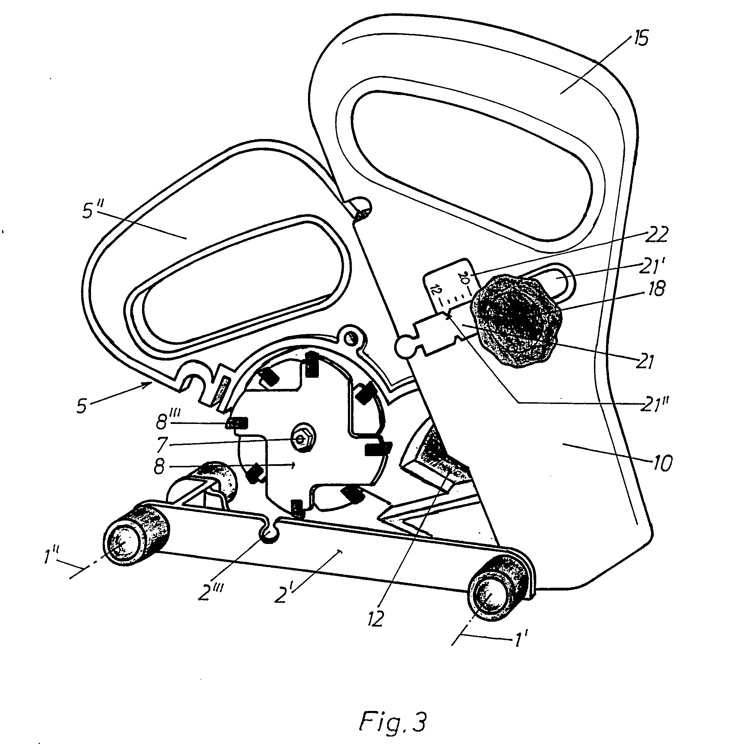

Fig. 3 eine schaubildliche Geräteansicht bei vollständig aufgeklapptem Gehäusedeckel,

Fig. 4 einen senkrechten, durch die Fräserwelle verlaufenden Geräteteilschnitt und

Fig. 5 die Vorderansicht auf das Gerät mit einem durch die vordere Fahrrollenachse verlaufenden Teilschnitt.

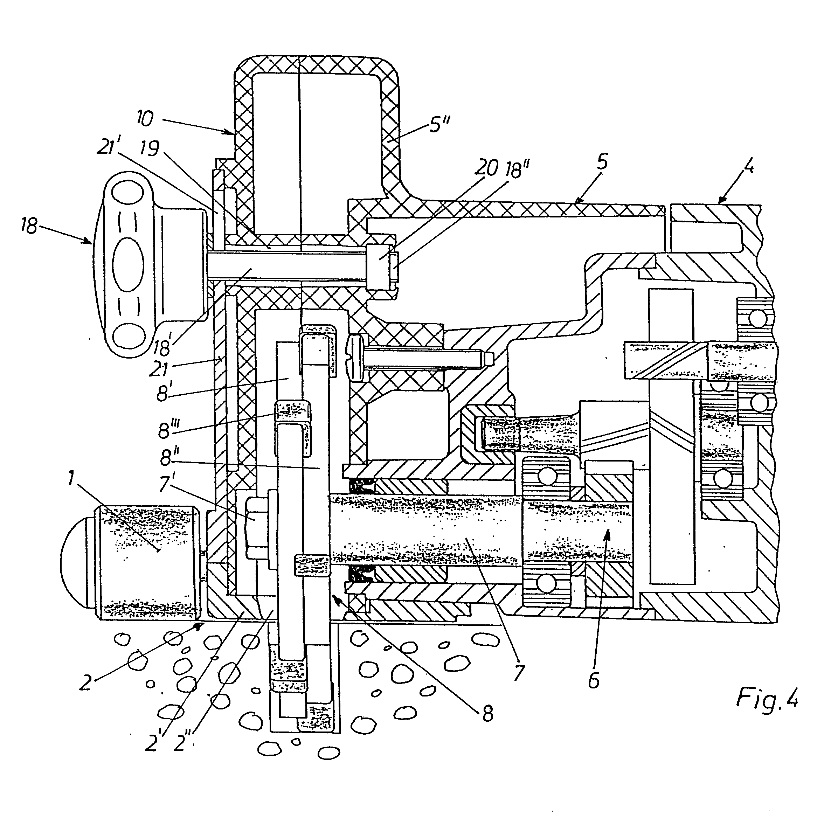

Das dargestellte Nutenfräsgerät besteht im wesentlichen aus dem mit Fahrrollen 1 versehenen Fahrgestell 2 und dem damit um die vordere Fahrrollenachse 1' schwenkverstellbar verbundenen Gerätegehäuse 3, das seinerseits aus dem einen Elektromotor enthaltenden Motorgehäuseteil 4 und dem damit fest verbundenen Getriebegehäuseteil 5 besteht. Im Getriebegehäuseteil 5 sind, wie insbesondere Fig. 4 zeigt, das Zahnraduntersetzungsgetriebe 6 sowie die Fräserwelle 7 mit dem an ihrem freien, stirnseitig aus dem Getriebegehäuseteil 5 herausragenden Ende sitzenden Fräser 8 untergebracht. Weiterhin ist wesentlicher Bestandteil der Nutfräse der formsteife Staubsammelbehälter 9, der im wesentlichen oberhalb der vorderen Fahrrollenachse 1' liegt und sich im wesentlichen achsparallel zu dem überwiegend in Höhe der hinteren Fahrrollenachse 1" liegenden Gerätegehäusebereich erstreckt, in welchem der Motor, das Getriebe 6, die Fräser welle 7 und der Fräser 8 liegen. Der Fräser 8 ist stirnseitig durch einen Gehäusedeckel 10 abgedeckt, der sowohl gemeinsam mit dem Getriebegehäuse 3 als auch unabhängig davon um die vordere Fahrrollenachse 1' schwenkverstellbar ist.

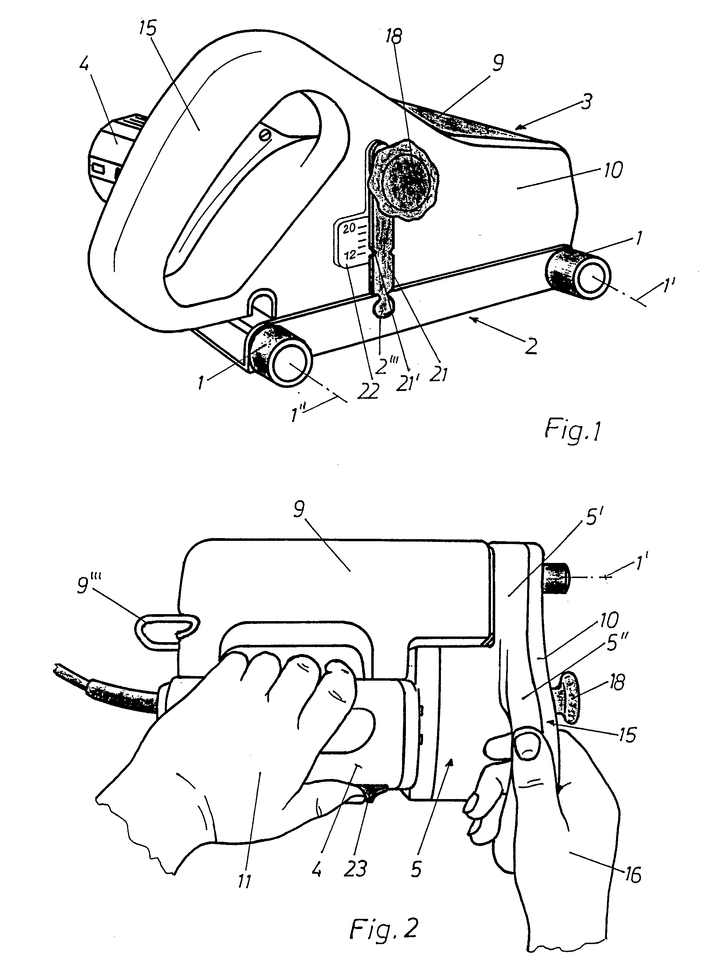

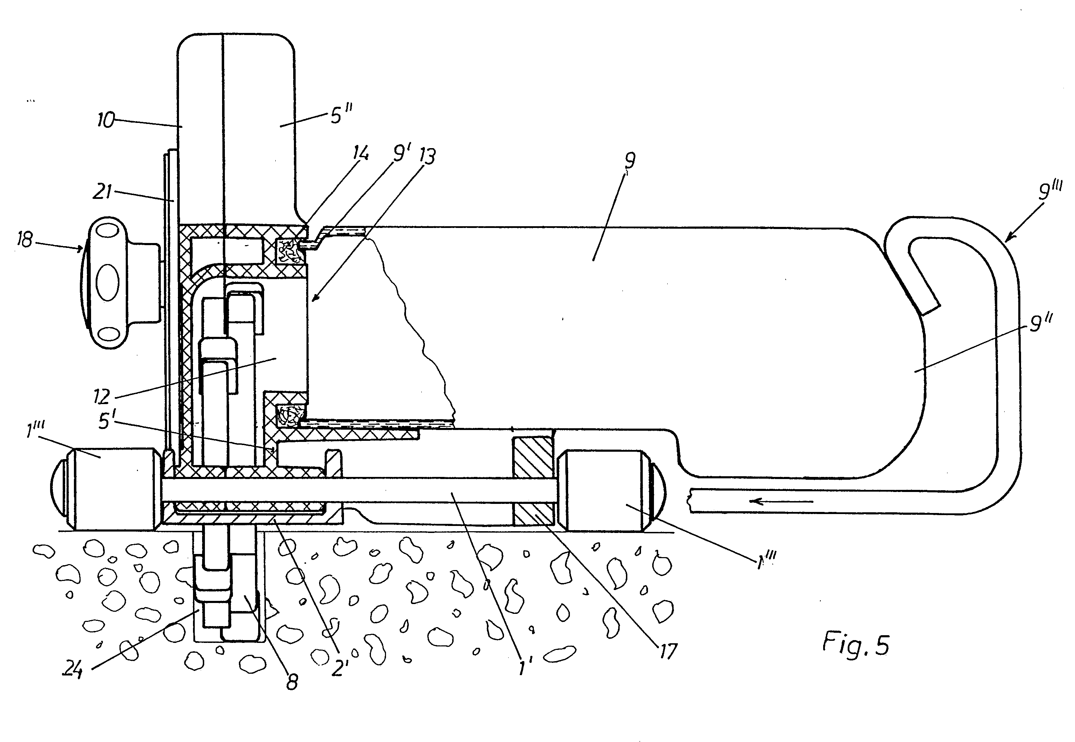

Das Fahrgestell 2 besteht aus einer U-Profilschiene 2', die an ihren Enden die Fahrrollenachsen 1', 1" trägt, an ihrer dem Gerätegehäuse 3 zugewandten Innenseite abgeflacht ist, mit ihrer Außenseite den Gehäusedeckel 10 unterkantenseitig überlappt und an ihrer Unterseite einen Durchtrittsschlitz 2" für den Fräser 8 aufweist (Fig. 4). Das Motorgehäuseteil 4 ist im wesentlichen zylindrisch ausgebildet und dient zugleich, wie Fig. 2 zeigt, als Handgriff für die linke Führungshand 11 der Bedienungsperson. Das mit dem Motorgehäuseteil 4 fest verbundene Getriebegehäuseteil 5 weist einen zur vorderen Fahrrollenachse 1' vorspringenden und darüber mit dem Fahrgestell gelenkig verbundenen Schwenkarm 5' auf. Dieser enthält einen Staubdurchtrittsschacht 12, der - wie Fig. 5 zeigt - zu einer auf der Innenwandseite des Schwenkarms 5' gelegenen axial gerichteten Staubaustrittsöffnung 13 führt, die von einem Dichtring 14 umgeben ist. Auf diese Öffnung 13 bzw. ihren Ring 14 ist der formsteif ausgebildete Staubsammelbehälter 9 mit seiner Füllöffnung 9' aufzusetzen, wobei der Behälter 9 durch eine an seinem gegenüberliegenden Ende 9" angreifende, am Getriebegehäuseteil 5 federnd gelagerte Zugstange 9'" gehalten werden kann. Dadurch ist ein einfaches Auswechseln des formsteifen Staubsammelbehälters möglich.

Das Getriebegehäuseteil 5 ist in seinem den Fräser 8 abdeckenden Bereich zu einer Griffhalbschale 5" geformt, die zusammen mit dem hier entsprechend geformten Gehäusedeckel 10 einen zweiten Handgriff 15 für die rechte Bedienungshand 16 bildet. Da dieser Griff 15 unmittelbar über bzw. hinter dem Fräser 8 liegt, dient er als Druckhandgriff, über den das Gerätegehäuse 3 und der Fräser 8 fest angedrückt werden können. Am Getriebegehäuseteil 5 ist außer dem Schwenkarm 5' weiter innen noch ein weiterer Schwenklagerarm 17 vorhanden, durch den, wie Fig. 5 zeigt, die vordere Fahrrollenachse 1' gleichfalls noch hindurchgeführt ist. Durch den im Vergleich zu den hinteren Fahrrollen größeren Abstand der beiden vorderen Fahrrollen 1'" wird eine noch bessere Auflage und Führung der Nutfräse auf der Wand od. dgl. ermöglicht.

Zur festen Verbindung des Gehäusedeckels 10 mit dem Getriebegehäuseteil 5 dient die Knebelschraube 18, die mit ihrem Gewindeschaft 18' die im Gehäusedeckel 10 vorhandene Bohrung 19 durchsetzt und mit ihrem Gewindeschaftende 18" in die am Getriebegehäuseteil 5 angebrachte Schraubenmutter 20 greift. Die Knebelschraube 18 dient zugleich auch zur Schwenkverstellarretierung des Gehäusedeckels 10 und Gehäuses 3 gegenüber dem Fahrgestell 2. Hierzu ist zwischen der Knebelschraube 18 und dem Fahrgestell 2 eine auf der Außenseite des Gehäusedeckels 10 angeordnete, höhenverstellbare Stellstange 21 vorhanden, die durch die Knebelschraube 18 festzuklemmen ist. Die Stellstange 21 ist mit ihrem unteren Ende in einer am Fahrgestell 2 vorhandenen Aussparung 2'" gelenkig und aushängbar befestigt, während sie an ihrem oberen Ende einen vom Schaft 18' der Knebelschraube 18 durchdrungenen Längsschlitz 21' aufweist. Auf dieser Stellstange 21 ist noch eine Anzeigemarke 21" vorhanden, die mit einer am Gehäusedeckel 10 angebrachten, z. B. in Millimetern geeichten Skala 22 die jeweilige Tiefeneinstellung des Fräsers 8 kenntlich macht, also als entsprechende Anzeigeeinrichtung dient. Zur Frästiefenverstellung brauchen die Knebelschraube 18 nur etwas gelöst und das Gerätegehäuse gegenüber dem Fahrgestell entsprechend geschwenkt werden, wobei die jeweils gewünschte Einstelltiefe an der Anzeigeeinrichtung 21″, 22 leicht abgelesen werden kann.

Der Fräser 8 besteht zweckmäßig aus zwei Fräserscheiben 8′, 8″. Sie besitzen ein unsymmetrisches Bohrungsprofil, so daß eine verkehrte Montage ausgeschlossen ist. Auch ist es gleich, ob zunächst die Scheibe 8′ oder 8″ auf die Fräserwelle 7 aufgesteckt wird. Die Hartmetallplatten 8‴ sind in den Fräserscheiben 8′, 8″ wechselseitig seitlich versetzt eingelötet, wodurch die Fräsleistung gesteigert werden kann. Die beiden Fräserscheiben 8′, 8″ sind um 45° versetzt auf die Welle 7 aufgesteckt, so daß sie einem achtzahnigen Fräser entsprechen und deshalb auch eine ruhigere Fräserarbeit als ein mit weniger Zähnen versehener Fräser ermöglichen. Zum allfälligen Fräserwechsel und zur Reinigung des Geräts wird die Knebelschraube 18 ganz aus der im Getriebegehäuseteil 5 sitzenden Mutter 20 herausgedreht und die Stellstange 21 aus dem Fahrgestell 2 ausgehängt. Sodann können das Fahrgestell 2, das Gerätegehäuse 3 sowie der Gehäusedeckel 10 um die Achse 1′ voll auseinandergeschwenkt werden. Sodann kann die Fräserschraube 7′ gelöst werden, wobei zur Drehfixierung des Fräsers 8 und der Fräserwelle 7 noch ein Montagestift in eine gehäusefeste Bohrung gesteckt werden kann.

Das Gerät ist mit einem Zweihand-Sicherheitsschalter ausgerüstet, zu dem der Schiebeschalter 23 gehört. Damit dieser mit der linken Hand geschaltet werden kann, muß vorher mit der rechten Hand kurz eine Entriegelung gedrückt werden. Hierdurch wird verhindert, daß sich während des Einschaltens versehentlich eine Hand im Fräserbereich befindet.

Im vorderen Bereich des Gehäusedeckels 10 ist noch ein nicht dargestellter Führungsschieber untergebracht. Er kann soweit ausgeschoben werden, daß er unter dem Fahrgestell 2 vorsteht und in eine bereits gefräste Nut 24 eingehängt werden kann. Das Gerät wird dadurch geführt und es können auf diese Weise durch mehrmaliges Fräsen entsprechend breitere Nuten hergestellt werden.

Mit dem vorbeschriebenen Gerät können Nuten in den verschiedensten Wandmaterialien verhältnismäßig schnell gefräst werden. So hat sich gezeigt, daß damit bei 20 mm tiefen und 12 mm breiten Nuten erhebliche Fräsleistungen, nämlich in weicherem Putz und Gasbeton von etwa 10 m/min, in hartem Zementputz von ca. 7 m/min, in Poreton von ca. 4 m/min und bei Gitter-Ziegeln und Kalksandstein von ca. 2,5 m/min erzielt werden können. Da der Druckhandgriff 15 genau über bzw. hinter dem Fräser 8 liegt, können bei der Fräsarbeit keine sonst störenden Drehmomente auf das Gerät ausgeübt werden, was ein Geradeausfräsen erschweren würde. Wesentlich ist weiterhin auch, daß durch die Ausbildung und Anordnung des formsteifen Staubfangbehälters die Bedienung des Geräts nicht erschwert wird. Durch die Schaufelwirkung des Fräsers 8 wird nahezu das gesamte entstehende Fräsmehl in den in das Gerät kompakt integrierten Behälter 9 geschleudert und darin gesammelt. Das jeweilige Abnehmen, Entleeren und Wiederaufsetzen des Behälters 9 kann außerordentlich einfach innerhalb weniger Sekunden vorgenommen werden.

## Ansprüche

1. Motorisch betreibbares Handgerät zum Fräsen von Nuten in Wänden od.dgl., mit einem auf die Wand aufsetzbare Fahrrollen (1) aufweisenden und damit höhenverstellbar verbundenen Gerätegehäuse (3), in welchem einerseits der Antriebsmotor nebst Getriebe und andererseits die Fräserwelle mit an ihrem stirnseitig aus dem Gerätegehäuse herausragenden Ende sitzendem Fräser untergebracht sind, einem letzteren stirnseitig abdeckenden Gehäusedeckel (10) und einer Staubsammeleinrichtung, **dadurch gekennzeichnet**, daß die Fahrrollen (1) auf einem gemeinsamen Fahrgestell (2) angebracht sind, das Gerätegehäuse (3) mit dem Fahrgestell (2) in Höhe seiner einen Fahrrollenachse (1′) schwenkverstellbar verbunden und hiermit einem formsteifen Staubsammelbehälter (9) versehen ist, der sich im wesentlichen achsparallel zu dem überwiegend in Höhe der anderen Fahrrollenachse (1″) liegenden Gerätegehäusebereich (4, 5) erstreckt, in welchem der Motor, das Getriebe (6), die Fräserwelle (7) und der Fräser (8) untergebracht sind.

2. Handgerät nach Anspruch 1, **dadurch gekennzeichnet**, daß die Schwenkverstellachse zwischen Gerätegehäuse (3) und Fahrgestell (2) durch die in Fahrrichtung vordere Fahrrollenachse (1′) verläuft und der halbschalenartig ausgebildete Gehäusedeckel (10) sowohl gemeinsam mit dem Gerätegehäuse (3) als auch unabhängig davon gleichfalls um diese Achse (1′) schwenkverstellbar ist.

3. Handgerät nach Anspruch 2, **dadurch gekennzeichnet**, daß das Gerätegehäuse (3) aus einem im wesentlichen zylindrischen, zugleich einen Führungshandgriff bildenden Motorgehäuseteil (4) und einem damit fest verbundenen Getriebegehäuseteil (5) besteht, das einen zur vorderen Fahrrollenachse (1′) vorspringenden und darüber gelenkig mit dem Fahrgestell (2) verbundenen Schwenkarm (5′) aufweist, der einen Staubdurchtrittsschacht (12) sowie auf seiner Innenwandseite eine von einem Dichtring (14) umgebene, axial gerichtete Staubaustrittsöffnung (13) aufweist, auf der der im wesentlichen zylindrische formsteife Staubsammelbehälter (9) mit seiner stirnseitigen Füllöffnung (9′) lösbar zu befestigen ist.

4. Handgerät nach Anspruch 3, **dadurch gekennzeichnet**, daß der Staubsammelbehälter (9) mit seiner Füllöffnung (9′) durch eine an seinem gegenüberliegenden Ende (9″) angreifende, am Getriebegehäuseteil (5) federnd gelagerte Zugstange (9‴) gegen die Staubaustrittsöffnung (13) zu drücken ist.

5. Handgerät nach Anspruch 3, **dadurch gekennzeichnet**, daß das Getriebegehäuseteil (5) in seinem den Fräser (8) abdeckenden Bereich zu einer Griffhalbschale (5″) geformt ist, die zusammen mit dem hier entsprechend geformten Gehäusedeckel (10) einen zweiten Bedienungshandgriff, nämlich einen Druckhandgriff (15) bildet.

6. Handgerät nach Anspruch 3, **dadurch gekennzeichnet**, daß am Getriebegehäuseteil (5) außer dem Schwenkarm (5′) weiter innen ein weiterer Schwenklagerarm (17) vorhanden ist, durch den die vordere Fahrrollenachse (1′) hindurchgeführt ist.

7. Handgerät nach einem der Ansprüche 1 bis 6, **dadurch gekennzeichnet**, daß das Fahrgestell (2) aus einer U-Profilschiene (2′) besteht, die an ihren Enden die Fahrrollenachsen (1′, 1″) trägt, an ihrer dem Gehäuse (3) zugewandten Innenseite abgeflacht ist, mit ihrer Außenseite den Gehäusedeckel (10) unterkantenseitig überlappt und an ihrer Unterseite einen Durchtrittsschlitz (2″) für den Fräser (8) aufweist.

8. Handgerät nach einem der Ansprüche 1 bis 7, **dadurch gekennzeichnet**, daß im Gehäusedeckel (10) eine ihn mit dem Gerätegehäuse (3) verbindende Knebelschraube (18) gelagert ist, die mit ihrem Gewindeschaftende (18″) in eine am Gerätegehäuse (3) angebrachte Schraubenmutter (20) greift, wobei die Knebelschraube (18) zugleich zur Schwenkverstellarretierung des Deckels (10) und Gehäuses (3) gegenüber dem Fahrgestell (2) dient.

9. Handgerät nach Anspruch 8, **dadurch gekennzeichnet**, daß zwischen der Knebelschraube (18) und dem Fahrgestell (2) eine auf der Außenseite des Gehäusedeckels (10) angeordnete, höhenverstellbare Stellstange (21) vorhanden ist, die durch die Knebelschraube (18) festzuklemmen ist.

10. Handgerät nach Anspruch 9, **dadurch gekennzeichnet**, daß die Stellstange (21) mit ihrem unteren Ende am Fahrgestell (2) gelenkig und aushängbar befestigt ist und an ihrem oberen Ende einen vom Schaft (18′) der Knebelschraube (18) durchdrungenen Längsschlitz (21′) aufweist.

11. Handgerät nach Anspruch 10, **dadurch gekennzeichnet**, daß zwischen Stellstange (21) und Gehäusedeckel (10) eine die Tiefeneinstellung des Fräsers (8) kenntlich machende Anzeigeeinrichtung vorhanden ist, z.B. in Form einer deckelseitig angebrachten Skala (22) und einer damit zusammenwirkenden Anzeigemarke (21‴) auf der Stellstange.

*Fig.1*

*Fig. 2*

*Fig.3*

Fig.4

EP 0 314 954 A2

Fig. 5